# EUROPÄISCHE PATENTSCHRIFT

(11) **EP 0 482 723 B1**
(45) Veröffentlichungstag und Bekanntmachung des Hinweises auf die Patenterteilung: **27.09.1995**
(21) Anmeldenummer: 91250195.4
(22) Anmeldetag: 18.07.1991
(51) Int. Cl.: B29B 17/00, B29B 13/10, B29B 13/04

(54) **Anlage zum Zerkleinern von Gummi**
Device for the comminution of rubber
Dispositif pour le broyage du caoutchouc

(30) Priorität: 23.10.1990 DE 4033599
(43) Veröffentlichungstag der Anmeldung: 29.04.1992
(73) Patentinhaber: UBD PATENT-UND LIZENZVERWALTUNGSGESELLSCHAFT DETAMPEL MBH, D-10787 Berlin (DE)
(72) Erfinder: Bonnet, Olivier, W-1000 Berlin 41 (DE)
(74) Vertreter: Scholz, Hartmut, Dipl.-Ing. Patentanwalt

(56) Entgegenhaltungen:
- EP-A- 0 005 926
- GB-A- 2 079 917
- US-A- 2 447 249
- PATENT ABSTRACTS OF JAPAN vol. 4, no. 33 (M-3)(515) 21. März 1980 & JP-A-55 005 843 (JIYUNJI FUJITA) 17. Januar 1980
- GUMMI, ASBEST, KUNSTSTOFFE. Bd. 42, Nr. 12, Dezember 1989, STUTTGART DE Seiten 645 - 651; Dr. STANISLAW BARSKI UND DR. ZBIGNIEW KORZEN: "Prallzerkleinerung von eingefrorenen Altreifen" (insbesondere fig. 3)
- 645 - 651; DR. STANISLAW BARSKI UND DR. ZBIGNIEW KORZEN: 'Prallzerkleinerung von eingefrorenen Altreifen'

## Beschreibung

Die Erfindung betrifft eine Anlage zum Zerkleinern von Gummi, insbesondere von Altgummi, Altreifen, Gummiteilen und Gummiabfällen, bestehend aus einem schräg gestellten, eine Fördervorrichtung enthaltenden und über einen Eingabeschacht beschickbaren Vorkühltunnel, einen mit dem Vorkühltunnel durch einen Verbindungsschacht verbundenen, mit einem Kältemittel zumindest teilweise gefüllten und mit einer Fördervorrichtung versehenen Hauptkühltunnel und einer dem Hauptkühltunnel nachgeschalteten Brecheinrichtung.

Mit einer derartigen Anlage, wie sie beispielsweise aus der DE 39 15 984 C1 bekannt ist, soll Altgummi entsorgt, nämlich recycelt werden. Problematisch ist, daß Gummi als ausvulkanisierter Kautschuk durch Erwärmen nicht plastifiziert sondern verkohlt wird.

Altgummi fällt auch in großer Menge in Form von nicht mehr runderneuerbaren Karkassen von Autoreifen an. Derartige-Altreifen stellen ein erhebliches Entsorgungsproblem dar und erzeugen bei der bisher üblichen Entsorgung durch Verbrennen eine große Menge an schadstoffhaltigen Abgasen, die wiederum durch geeignete Filteranlagen zu entsorgen sind.

Ein weiteres Problem sind die textilen oder metallischen Verstärkungen, die in die Karkassen eingelegt sind. Altgummi soll nach dem bekannten Verfahren durch Granulieren in einen wiederverwendbaren Stoff gewandelt und so erneut zu einem Produkt verarbeitet werden. Der elastische Altgummi wird dazu mit Hilfe eines Kältemittels, nämlich flüssigem Stickstoff auf sehr tiefe Temperaturen, ca. - 140°C unterkühlt, wodurch er versprödet und dann gemahlen werden kann. Problematisch bei dem bekannten Verfahren ist es, eine bis in die Kernzone der zu zerkleinernden Altreifen reichende Durchkühlung und Versprödung zu erzielen. Dazu ist eine ausreichend lange Beaufschlagung der Altreifen mit dem Kältemittel erforderlich. Gleichzeitig muß ein einwandfreier Transport der sich langsam abkühlenden Reifen gewährleistet sein, um eine Erwärmung durch Reibung auszuschließen.

Aufgabe der vorliegenden Erfindung ist es, eine Anlage der eingangs beschriebenen Art zu schaffen, die eine gute Durchkühlung bei kontinuierlicher Förderung des zu zerkleinernden Altgummis gewährleistet.

Gelöst wird diese Aufgabe dadurch, daß der Hauptkühltunnnel und der Vorkühltunnel zusätzlich zum Verbindungsschacht über mindestens ein Kältemittel führendes Vergasungsrohr miteinander verbunden sind. Durch diese Maßnahmen wird erreicht, daß das durch Vergasung in dem Hauptkühltunnel frei gesetzte Kältemittel gegen den Förderstrom des zu zerkleinernden Altgummis im Gegenstrom bis in den Bereich des Beschickungsschachtes gelangt. Die in den Beschickungsschacht aufgegebenen Altgummiteile werden hier an dem tiefsten Punkt der Anlage in eine relativ kalte Atmosphäre eingegeben und können bis zur Übergabe in den Hauptkühltunnel weiter erheblich abgekühlt werden. Bei dieser Abkühlung können bereits Temperaturen von ca -80°C bis -140°C erreicht werden.

Kälteenergieverlust soll für einen kostengünstigen Betrieb der Anlage möglichst vermieden werden. Dazu ist es vorgesehen, daß der Beschickungsschacht des Vorkühltunnels mit einem Abschlußdom dicht überdeckt und dem Abschlußdom ein Saugventilator zugeordnet ist, mit dem mit den Gummiteilen eindringende feuchte Luft abgesagt werden kann, sowie, daß der Beschickungsschacht eine Beschickungsöffnung aufweist, durch die der Vorkühltunnel mittels einer Pendelklappe beschickbar ist und die durch ein Verschlußmittel zumindest teilweise verschließbar ist. Durch diese Maßnahmen wird bei reibungslosem Transport der zu zerkleinernden Altgummiteile gleichzeitig eine ständig fortschreitende Unterkühlung sichergestellt.

Um die benötigte Menge an Kältemittel, nämlich an flüssigem Stickstoff, auf ein Minimum reduzieren zu können, ist es vorgesehen, daß der Innenraum des Hauptkühltunnels durch seitliche Trennwände in der Breite und unterhalb der Abwinkelung der Fördervorrichtung durch eine Freiraumbegrenzung begrenzt ist und der so abgeteilte freie Raum durch isolierende Hinterfüllungen ausgefüllt ist.

Um Kältebrücken durch die Lagerung der an sich gegen Kälteverluste isolierten Tunnelrohre zu gewährleisten, ist es vorgesehen, daß der Vorkühltunnel und der Hauptkühltunnel stabile Tunnelwandungen aufweisen und die stabilen Tunnelwandungen auf Tunnellagerungen gleitgelagert sind. Durch diese Maßnahmen wird eine direkte Verbindung zwischen dem das Kältemittel führende Innenrohr des Hauptkühltunnels bzw. des Vorkühltunnels vermieden. Durch die Kältebeaufschlagung kann es bei den Rohren der Kühltunnel zu einer Volumenkontraktion kommen, die über die gesamte Länge gesehen 20 bis 30 mm betragen kann. Um zu vermeiden, daß die Tunnelrohre durch diese Volumenkontraktion reißen, ist es vorgesehen, daß die Tunnelwandungen auf gleitfähigem Kunststoff gelagert sind, ferner ist es vorgesehen, daß die Hauptkühltunnel mit einer Längenänderungskompensation versehen sind.

Um ein Festfrieren der in dem Kältemittel beweglichen Bauteile zu vermeiden, ist es vorgesehen, daß die Fördervorrichtung mit einer Abwinkelung aus der Kältemittelfüllung und durch eine, durch ein Schleusensystem gegen Außenluft abgedichtete Austragsöffnung in einer Stirnseite aus dem Innenraum des Hauptkühltunnels geführt ist. Dadurch wird das Eindringen von Luftfeuchtigkeit vermieden und ein Festfrieren ausgeschlossen. Außerdem ist es zur Erzielung einer besseren Isolierung vorgesehen, daß die Vorkühltunnel und die Hauptkühltunnel mit einer Vakuumisolierung versehen sind.

Weitere vorteilhafte Maßnahmen sind in den Unteransprüchen beschrieben. Die Erfindung ist anhand eines Ausführungsbeispiels in der beiliegenden Zeichnung dargestellt und wird nachfolgend näher beschrieben; es zeigt:
- Figur 1: die Seitenansicht einer erfindungsgemäßen Anlage, entlang der Linie I-I in Figur 2 geschnitten, mit schräg verlaufendem Vorkühltunnel mit vorgeschalteter Schneideinrichtung und mit horizontal verlaufendem Hauptkühltunnel mit nachgeordneter Brecheinrichtung,
- Figur 2: die Draufsicht auf eine Anlage nach der Fig. 1;
- Figur 3: den Längsschnitt durch einen Hauptkühltunnel nach der Figur 1;
- Figur 4: den Querschnitt durch einen Hauptkühltunnel entlang der Linie III-III in der Figur 3;
- Figur 5: die Draufsicht auf eine Brecheinrichtung, mit zugeordnetem Austragsförderband, Förderbandüberdeckung mit Sichtklappen und Überbandmagnet;
- Figur 5a: den Schnitt durch die Förderbandüberdeckung mit Sichtklappen entlang der Linie V-V in Figur 5;
- Figur 6: die schematische Darstellung einer Doppelbrecheinrichtung mit Siebböden und Feinmahlkammern.

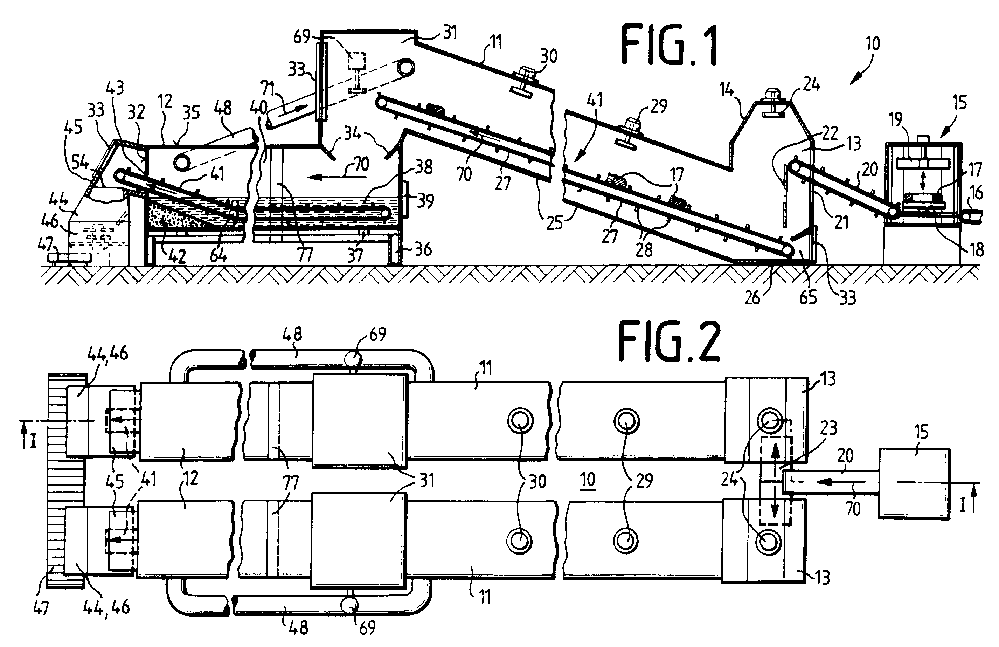

Die in den Figuren 1 und 2 schematisch dargestellte Recyclinganlage 10 besteht im wesentlichen aus einem rohrförmigen Vorkühltunnel 11 und einem dem Vorkühltunnel 11 nachgeordneten Hauptkühltunnel 12. Dem Vorkühltunnel 11 vorgeordnet ist eine Schneideinrichtung 15, die über ein Zuführförderband 16 mit zu granulierendem Recyclinggut 17, beispielweise Altreifen, beschickt werden kann.

Die Schneideinrichtung 15 besteht aus einem Stanztisch 18, auf dem das Recyclinggut 17 von dem Zuführförderband 16 abgelegt und mit einem niederfahrbaren Stanzmesser 19 in etwa Handteller große Stücke vorzerkleinert wird. Das derart von der Schneideinrichtung 15 zerkleinerte Recyclinggut 17 wird nacheinander von einem unterhalb des Stanztisches 18 angeordneten Aufgabeband 20 in Förderrichtung 70 (Pfeil) zu einem Beschickungsschacht 13 gefördert, der oberhalb eines Bodenbereiches 65 des Vorkühltunnels 11 vorgesehen ist.

Wie die Figur 2 zeigt, sind zur besseren Auslastung zwei parallel nebeneinander verlaufende Recyclinganlagen 10 vorgesehen, die von der Schneideinrichtung 15 alternierend bedient werden können. Dem Aufgabeband 20 ist im Bereich der nebeneinander vorgesehenen Beschickungsschächte 13 ein Verteiler, beispielsweise in Form einer Pendelklappe 23 zugeordnet, die rechnergesteuert das ankommende Recyclinggut 17 verteilt. Die Beschickungsschächte 13 sind mit seitlichen Beschickungsöffnungen 21 versehen, die zur Vermeidung von Kälteabflüssen mit einem Vorhang 22, beispielsweise einen Kettenvorhang oder einer Schleusenklappe versehen sind.

Jeder Beschickungsschacht 13 ist oben mit einem Abschlußdom 14 abgeschlossen. In dem Abschlußdom 14 ist ein Saugventilator 24 vorgesehen, der bis aus dem Bodenbereich 65 des Vorkühltunnels 11 evntuell eingedrungene, mit Feuchtigkeit beladene Luft absaugt.

Der Vorkühltunnel 11 besteht aus einer festen äußeren Tunnelwandung 25, beispielsweise einem Stahlrohr, welches auf einer Gleitlagerung 26 die kältebedingte Volumenkontraktion ausgleichend gleitend gelagert ist. Im Inneren des Vorkühltunnels 11 ist ein Förderer 27 vorgesehen, beispielsweise ein Kettenförderer aus V2A-Stahl oder ein Drahtgeflechttransportband, der mit Mitnehmern 28 versehen ist. Der Vorkühltunnel 11 ist von dem Bodenbereich 65 ausgehend schräg aufwärts zu einem oberhalb des Hauptkühltunnels 12 angeordneten Verbindungsschacht 31 verlaufend ausgerichtet.

Über dem Förderer 27 sind in dem Vorkühltunnel 11 mehrere Ventilatoren 29 und 30 angeordnet, die die von dem Hauptkühltunnel 12 durch die Vergasungsrohre 48 kommende Kälte verwirbeln und in Richtung des Bodenbereiches 65 fördern. Unterstützt von den Saugventilatoren 24 in den Abschlußdomen 14 entsteht so ein zirkulierendes Kältemittelgas, welches im Gegenstrom dem aufwärtsgeförderten Recyclinggut 17 entgegenströmt. Das mit Raumtemperatur in den Bodenbereich 65 des Vorkühltunnels 11 einfallende Recyclinggut 17 wird so auf seinem Weg zu dem Verbindungsschacht 31 auf ca. -80°C bis -140°C vorgekühlt.

Das solchermaßen vorgekühlte Recyclinggut 17 wird in dem Verbindungsschacht 31 an den Hauptkühltunnel 12 übergeben, wo es über Leitbleche 34 in ein Kältemittel 38 fällt. Der Füllstand des Kältemittels 38 wird mit Hilfe eines Füllstandsanzeigers 39 geregelt. Das Kältemittel 38, beispielsweise flüssiger Stickstoff, hat eine Temperatur von ca. -195°C. Das mit -80°C bis -140°C einfallende Recyclinggut 17 ist dazu relativ warm, wodurch es bei seinem Eintauchen in das wesentlich kältere Kältemittel 38 zu einem Aufkochen, dh. zu einem Vergasen von Stickstoff kommt. Der gasförmige Stickstoff wird über die Vergasungsrohre 48 aus dem Hauptkühltunnel 12 etwa im Bereich des Verbindungsschachtes 31 in den Vorkühltunnel 11 eingeleitet. Dadurch entsteht ein Kältemittel-Gasstrom 71, der in Richtung auf den Bodenbereich 65 verläuft. Dieser Kältemittel-Gasstrom 71 kann durch in den Vergasungsrohren 48 angeordnete Ventilatoren 69 verstärkt und in seiner Richtung stabilisiert werden.

Der Hauptkühltunnel 12 besteht ebenfalls aus einer stabilen äußeren Tunnelwandung 35 und ist im wesentlichen horizontal liegend angeordnet. Er ist auf einer Tunnellagerung 37 gleitgelagert, die wiederum auf einem Kühltunnelunterbau 36 steht. Zum Ausgleich der temperaturbedingten Längenschwankungen ist eine Längenänderungskompensation 77 vorgesehen, in der der Hauptkühltunnel 12 seine Länge verändern kann. Der Verbindungsschacht 31 ist mit einer dicht verschließbaren Revisionsöffnung 33 versehen, durch die sowohl der Vorkühltunnel 11 als auch der Hauptkühltunnel 12 zugänglich sind.

Im Inneraum 40 des Hauptkühltunnels 12 ist eine Fördervorrichtung 41, beispielsweise ein Kettenförderband aus V2A-Stahl angeordnet, welches mit Mitnehmern 28 versehen ist. Das eingeworfene Recyclinggut 17 taucht ganz in das Kältemittel 38 ein und wird in Förderrichtung 70 (Pfeil) bis in seinen Kern auf ca. -120°C bis -190°C untergekühlt.

Die Fördereinrichtung 41 verläuft in dem Kältemittel 38 im wesentlichen horizontal. Im Bereich der dem Verbindungsschacht 31 entgegengesetzten Stirnseite 32 ist die Fördervorrichtung 41 mit einer Abwinkelung 64 versehen und verläuft zunächst schräg aufwärts aus dem Kältemittel 38 und dann durch eine Austragsöffnung 43 aus dem Innenraum 40 des Hauptkühltunnels 12 hinaus. Das nunmehr tiefgekühlte Recyclinggut 17 wird sodann zur Verteilung auf nachgeschaltete, paarweise angeordnete Brecheinrichtungen 46 an ein sogenanntes Hosenstück 44 zu übergeben.

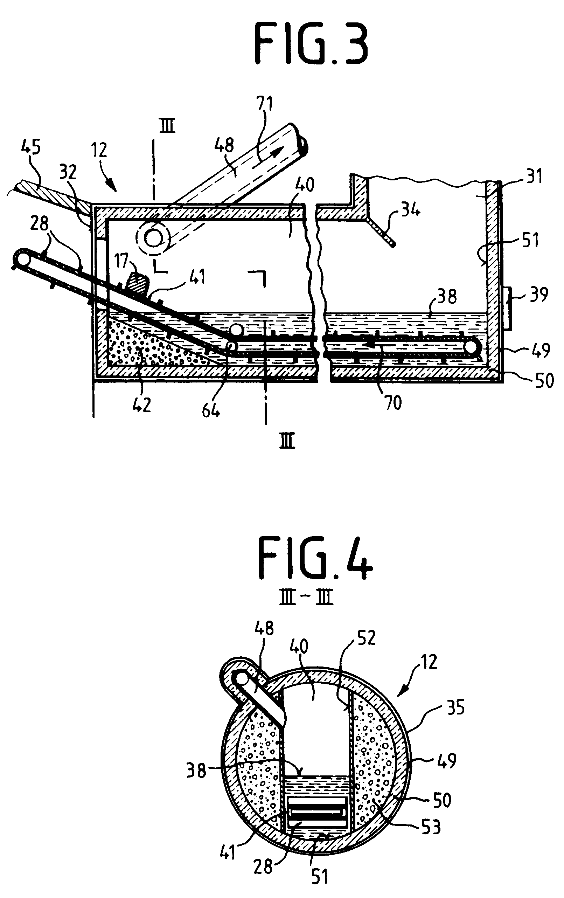

Wie die Figur 4 zeigt, sind in dem Hauptkühltunnel 12 beiderseits der Fördereinrichtung 41 im wesentlichen senkrecht stehende seitliche Trennwände 52 angeordnet. Durch diese Trennwände 52 wird der Innenraum 40 des Hauptkühltunnels 12 um den im Grunde nicht benötigten toten Raum, der durch den rohrförmigen Tunneldurchmesser entsteht, verkleinert. Dieser tote Raum ist mit einer aus einem Isoliermaterial bestehenden Hinterfüllung 53 hinterfüllt. Die Menge an benötigtem Kältemittel 38, die einen nicht unerheblichen Kostenfaktor darstellt, kann so wesentlich verringert werden.

Gegenüber der äußeren Tunnelwandung 35 ist der Innenraum 40 des Hauptkühltunnels 12 durch eine Isolierung 50 isoliert, die nach außen mit einer Vakuumisolierung 49 versehen ist. Die Innenseite der Isolierung 50 weist eine Innenbeschichtung 51 auf, die resistent gegen das Kältemittel 38 ist.

Wie die Figur 3 weiter zeigt, ist unterhalb der Abwinkelung 64 der Fördereinrichtung 41 eine Freiraumbegrenzung 42 vorgesehen, die ebenfalls die zur Füllung des Hauptkühltunnels 12 benötigte Menge an Kältemittel 38 verringert.

Um ein Wiedererwärmen des tiefgekühlten Recyclinggutes 17 beim Austragen aus dem Hauptkühltunnel 12 durch die Austragsöffnung 43 zu vermeiden, ist oberhalb des Hosenstückes 44 eine kälteisolierende Abdeckhaube 45 vorgesehen.

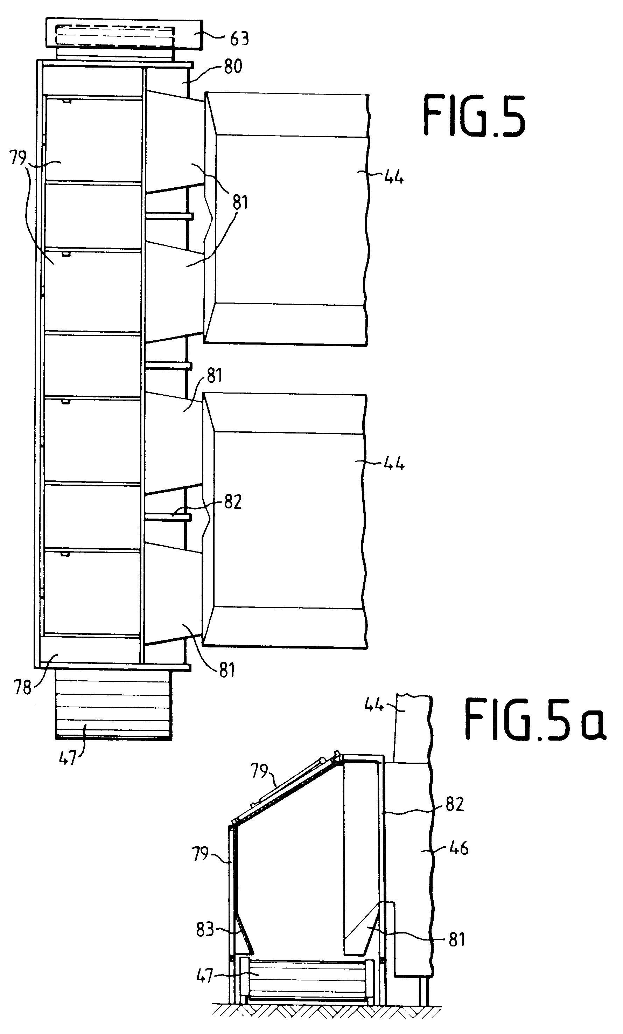

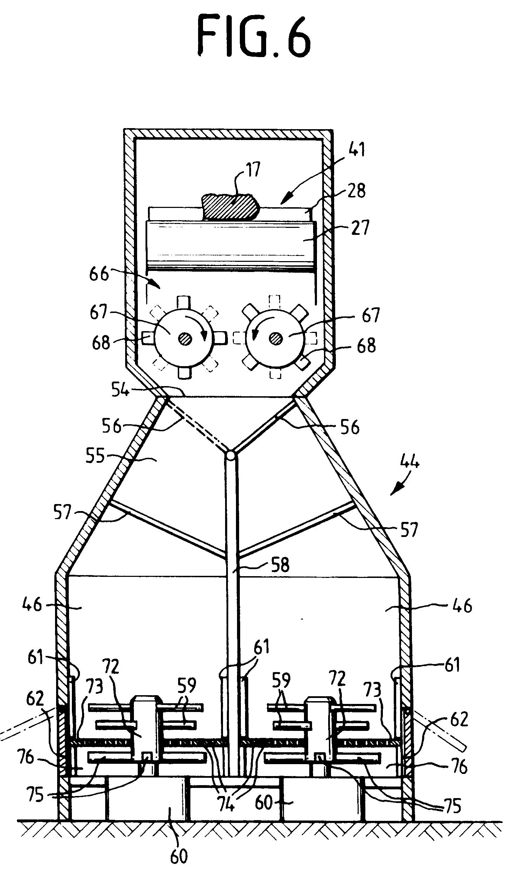

Wie die Figur 5 zeigt, sind jedem der paarweise angeordneten Hauptkühltunnel 12 zwei Brecheinrichtungen 46 zugeordnet. Diese Brecheinrichtungen 46 werden durch je ein Hosenstück 44, wie es in der Figur 6 im Detail dargestellt ist, beschickt. Ein Hosenstück 44 hat dazu eine Aufgabeöffnung 54, durch die das tiefgekühlte Recyclinggut 17 in die Brecheinrichtungen 46 fallen kann. Um Kälteverluste zu vermeiden, ist im Bereich der Aufgabeöffnung 54 ein Schleusensystem 55 vorgesehen, das aus einer oberen Schleusenklappe 56 und unteren Schleusenklappen 57 besteht. Die Schleusenklappen 57 sind paarweise angeordnet und beschicken rechnergesteuert die ebenfalls paarweise angeordneten Brecheinrichtungen 46.

Das Schleusensystem 55 verhindert zugleich das Eindringen von mit Feuchtigkeit beladener Außenluft. Dadurch wird das Eindringen von Wasser in die Kühltunnel 11 und 12 vermieden, denn Wasser kann zum Festfrieren der beweglichen Teile, beispielsweise der Fördervorrichtungen 27 und 41, führen. Um das Volumen der Hosenstücke 44 zu verringern, sind in dem Schleusensystem 55 Trennwände 58 vorgesehen, die im wesentlichen senkrecht verlaufen.

Oberhalb der Aufgabeöffnungen 54 können Nasen- oder Walzenbrecher 66 angeordnet sein, mit denen das tiefgekühlte Recyclinggut 17 vorzerkleinert werden kann, bevor es zum Zermalen in die Brecheinrichtungen 46 gelangt. Die Nasenbrecher 66 bestehen aus Brecherwalzen 67, auf denen Brechernasen 68 angeordnet sind.

In den Brecheinrichtungen 46 sind drehbare Schlagleisten 59 vorgesehen, die von einem Schlagleistenantrieb 60 in rotierende Bewegung versetzt werden können. Als Schlagleistenantrieb 60 ist beispielsweise ein Elektromotor vorgesehen. An der Innenwandung eines Brechers 46 sind feste Pralleisten 61 angeordnet, die im Zusammenwirken mit den Schlagleisten 59 das eingegebene Recyclinggut 17 zerschlagen. Die Schlagleisten 59 sind in der Höhe und um jeweils 90° an einer Drehachse 72 versetzt angeordnet. Um eine möglichst feine Vermahlung zu erzielen, sind die Brecher 46 mit Siebböden 73 versehen, die eine Vielzahl von Bohrungen 74 aufweisen. Unterhalb dieser Siebböden 73 sind Feinschlagleisten 75 vorgesehen, die in ebenfalls unterhalb der Siebböden 73 vorgesehenen Feinmahlkammern 76 rotieren. Auf diese Weise wird das durch die Bohrungen 74 in die unterhalb der Siebböden 73 gelegenen Feinmahlkammern 76 gelangte Recyclinggut 17 noch intensiver und damit feiner vermahlen.

Beim Vermahlen werden auch die textilen oder metallischen Verstärkungseinlagen freigelegt, die üblicherweise in Altreifen vorhanden sind. Durch eine Austragsöffnung 62 können die Brecheinrichtungen 46 entleert werden. Aus den Austragsöffnungen 62 fällt das nunmehr in eine relativ breite Kornfraktion vermahlene und granulierte Recyclinggut 17 auf ein Austragsförderband 47, über dem ein Überbandmagnet 63 abgeordnet ist.

Mit Hilfe des Überbandmagneten 63 werden zunächst die metallischen Verstärkungseinlagen ausgesondert. Das somit vorgesäuberte Recyclinggut 17 wird durch eine nicht näher dargestellte Separieranlage gesichtet und klassifiziert. Dabei werden auch die relativ fein zerkleinerten textilen Verstärkungseinlagen abgeschieden und das vermahlene Recyclinggut 17 in verschieden große Kornfraktionen aufgeteilt und und anschließend zur Weiterverarbeitung abgefüllt.

Wie die Figuren 5 und 5a zeigen, ist das Austragsförderband 47 mit einer Förderbandüberdeckung 78 versehen. Um eine Zugänglichkeit zu den Austragsöffnungen 62 der Brecheinrichtungen 46 zu erlangen, ist die Förderbandüberdeckung 78 mit Sichtklappen 79 versehen. Die Förderbandüberdeckung 78 besteht aus einer den Hosenstücken 44 zugewandten hinteren Wand 80, die mit einer Vielzahl von Versteifungen 82 versehen ist. Zwischen den Austragsöffnungen 62 der Brecheinrichtungen 46 und der Förderbandüberdeckung 78 sind jeweils Rutschen 81 vorgesehen. Die Förderbandüberdeckung 78 ist mit vorderen Begrenzungen 83 versehen, mit der sie das Austragsförderband 47 seitlich begrenzen. An dem in Förderrichtung hinteren Ende ist über dem Austragsförderband 47 ein Überbandmagnet 63 vorgesehen, mit dem metallische Bestandteile aus den zermahlenen Recyclinggut 17 herausgezogen werden können.

### Bezugszeichen

- 10: Altreifen-Recyclinganlage
- 11: Vorkühltunnel
- 12: Hauptkühltunnel
- 13: Beschickungsschacht
- 14: Abschlußdom
- 15: Schneideinrichtung
- 16: Zuführförderband
- 17: Recyclinggut
- 18: Stanztisch
- 19: Stanzmesser
- 20: Aufgabeband
- 21: Beschickungsöffnung
- 22: Vorhang
- 23: Pendelklappe
- 24: Saugventilator
- 25: äußere Tunnelwandung
- 26: Gleitlagerung
- 27: Förderer
- 28: Mitnehmer
- 29: Ventilator
- 30: Ventilator
- 31: Verbindungsschacht
- 32: Stirnseite
- 33: Revisionsöffnung
- 34: Leitblech
- 35: äußere Tunnelwandung
- 36: Kühltunnelunterbau
- 37: Tunnellagerung
- 38: Kältemittel
- 39: Füllstandsanzeiger
- 40: Innenraum
- 41: Fördervorrichtung
- 42: Freiraumbegrenzung
- 43: Austragsöffnung
- 44: Hosenstück
- 45: Abdeckhaube
- 46: Brecheinrichtung
- 47: Austragsförderband
- 48: Vergasungsrohr
- 49: Vakuumisolierung
- 50: Isolierung
- 51: Innenbeschichtung
- 52: Trennwand
- 53: Hinterfüllung
- 54: Aufgabeöffnung
- 55: Schleusensystem
- 56: obere Schleusenklappe
- 57: untere Schleusenklappe
- 58: Trennwand
- 59: Schlagleiste, drehbar
- 60: Schlagleistenantrieb
- 61: Pralleiste, fest
- 62: Austragsöffnung
- 63: Überbandmagnet
- 64: Abwinkelung
- 65: Bodenbereich
- 66: Nasenbrecher
- 67: Brecherwalze
- 68: Brechernase
- 69: Ventilator
- 70: Förderrichtung
- 71: Luft-Kältemittel-Gasstrom
- 72: Drehachse
- 73: Siebboden
- 74: Bohrung
- 75: Feinschlagleiste
- 76: Feinmahlkammer
- 77: Längenänderungskompensation
- 78: Förderbandüberdeckung
- 79: Sichtklappen
- 80: hintere Wand
- 81: Rutsche
- 82: Versteifungen
- 83: Begrenzung

## Patentansprüche

1. Anlage (10) zum Zerkleinern von Gummi, bestehend aus einem schräg gestellten, eine Fördervorrichtung (27) enthaltenden und über einen Eingabeschacht beschickbaren Vorkühltunnel (11), einen mit dem Vorkühltunnel (11) durch einen Verbindungsschacht (31) verbundenen, mit einem Kältemittel (38) zumindest teilweise gefüllten und mit einer Fördervorrichtung (41) versehenen Hauptkühltunnel (12) und einer dem Hauptkühltunnel (12) nachgeschalteten Brecheinrichtung (46), dadurch gekennzeichnet, daß der Hauptkühltunnnel (12) und der Vorkühltunnel (11) zusätzlich zum Verbindungsschacht (31) über mindestens ein Kältemittel führendes Vergasungsrohr (48) miteinander verbunden sind.

2. Anlage nach Anspruch 1, dadurch gekennzeichnet, daß der Hauptkühltunnel (12) im wesentlichen horizontal liegend angeordnet ist, die in dem Hauptkühltunnel (12) vorgesehene Fördervorrichtung (41) zumindest teilweise in dem Kältemittel (38) verläuft und in den zwischen dem Hauptkühltunnel (12) und dem Vorkühltunnel (11) vorgesehenen Vergasungsrohren (48) Ventilatoren (69) angeordnet sind.

3. Anlage nach den Ansprüchen 1 und 2, dadurch gekennzeichnet, daß der Beschickungsschacht (13) des Vorkühltunnels (11) mit einem Abschlußdom (14) dicht überdeckt und dem Abschlußdom (14) ein Saugventilator (24) zugeordnet ist.

4. Anlage nach den Ansprüchen 1 bis 3, dadurch gekennzeichnet, daß der Beschickungsschacht (13) eine Beschickungsöffnung (21) aufweist, durch die der Vorkühltunnel (11) mittels einer Pendelklappe (23) beschickbar ist und die durch ein Verschlußmittel (22) zumindest teilweise verschließbar ist.

5. Anlage nach den Ansprüchen 1 bis 4, dadurch gekennzeichnet, daß die Fördervorrichtung (41) mit einer Abwinkelung (64) aus dem Kältemittel (38) und durch eine mit einem Schleusensystem (55) verschlossene Austragsöffnung (43) aus dem Hauptkühltunnel (12) geführt ist.

6. Anlage nach den Ansprüchen 1 bis 5, dadurch gekennzeichnet, daß der Innenraum (40) des Hauptkühltunnels (12) durch seitliche Trennwände (52) in der Breite und unterhalb der Abwinkelung (64) der Fördervorrichtung (41) durch eine Freiraumbegrenzung (42) begrenzt ist und der so abgeteilte freie Raum durch isolierende Hinterfüllungen (53) ausgefüllt ist.

7. Anlage nach den Ansprüchen 1 bis 6, dadurch gekennzeichnet, daß der Vorkühltunnel (11) und der Hauptkühltunnel (12) stabile Tunnelwandungen (25, 35) aufweisen und die stabilen Tunnelwandungen (25, 35) auf Tunnellagerungen (26, 37) gleitgelagert sind.

8. Anlage nach den Ansprüchen 1 bis 7, dadurch gekennzeichnet, daß zwischen der Austragsöffnung (43) des Hauptkühltunnels (12) und dem Schleusensystem (55) eine Vorbrecheinrichtung (66) angeordnet ist.

9. Anlage nach den Ansprüchen 1 bis 8, dadurch gekennzeichnet, daß die Brecheinrichtung (46) mindestens einen Siebboden (73) aufweist, unter dem ein Feinschlagmesser (75) in einer Feinmahlkammer (76) rotierend angeordnet ist.

10. Anlage nach den Ansprüchen 1 bis 9, dadurch gekennzeichnet, daß die Vorkühltunnel (11) und die Hauptkühltunnel (12) mit einer Vakuumisolierung (49) versehen sind.

11. Anlage nach den Ansprüchen 1 bis 10, dadurch gekennzeichnet, daß die Hauptkühltunnel (12) mit einer Längenänderungskompensation (77) versehen sind.

## Claims

1. System (10) for comminuting rubber, conprising a pre-cooling tunnel (11) disposed in an inclined position and containing conveyor means (27), a main cooling tunnel (12) connected to pre-cooling tunnel (11) by a connecting well (31), at least partly filled with a refrigerant (38) and having conveyor means (41) therein, and crushing means (46) following said main cooling tunnel (12), characterized in that main cooling tunnel (12) and pre-cooling tunnel (11) are interconnected, in addition to well (31), by at least one gasification pipe (48) having refrigerant flowing therethrough.

2. System as in claim 1, characterized in that main cooling tunnel (12) is disposed in a substantially horizontal position, in that conveying means (41) provided in main cooling tunnel (12) runs at least partly through said refrigerant (38), and in that fans (69) are provided within the gasification pipes (48) extending between main cooling tunnel (12) and pre-cooling tunnel (11).

3. System as in claims 1 and 2, characterized in that charging well (13) of pre-cooling tunnel (11) is sealingly covered with a dome (14) and in that dome (14) has a suction fan (24) associated therewith.

4. System as in Claims 1 to 3, characterized in that charging well (13) has a charge opening (21) through which pre-cooling tunnel (11) can be charged by means of a rotary lock (23), said lock being adapted to be sealed at least partly by sealing means (22).

5. System as in claims 1 to 4, characterized in that conveying means (41) extends to leave refrigerant (38) at an angle (64) and to leave main cooling tunnel (12) through a discharge opening (43) sealed by a system of lock gates (55).

6. System as in claims 1 to 5, characterized in that the interior (40) of main cooling tunnel (12) is delimited in width by lateral partitions (52) and by free-space delimiting means (42) below angle (64) of conveying means (41), and in that the free space so separated is filled with an insulating fill-back material (53).

7. System as in claims 1 to 6, characterized in that pre-cooling tunnel (11) and main cooling tunnel (12) have sturdy tunnel walls (25, 35) and in that said sturdy tunnel walls (25, 35) are supported for sliding movement on tunnel mounts (26, 37).

8. System as in claims 1 to 7, characterized by pre-crushing means (66) disposed between discharge opening (43) of main cooling tunnel (12) and the lock gate system (55).

9. System as in claims 1 to 8, characterized by crushing means (46) comprising at least one screening bottom (73) having disposed therebelow a fine crushing knife (75) rotating in a fine crushing chamber (76).

10. System as in claims 1 to 9, characterized by pre-cooling tunnels (11) and main cooling tunnels (12) being provided with vacuum insulating means (49).

11. System as in claims 1 to 10, characterised by main cooling tunnels (12) being provided with means (77) for compensating changes in length.

## Revendications

1. Installation (10) de broyage du caoutchouc composée d'un caisson de prérefroidissement oblique (11) équipé d'un transporteur (27) alimenté par une tour, d'un caisson de refroidissement principal (12) équipé d'un transporteur (41) relié au tunnel de prérefroidissement (11) par une tour de jonction (31) et rempli partiellement au moins d'un réfrigérant (38), d'un dispositif de broyage (46) situé en aval du caisson de refroidissement principal (12), l'ensemble étant caractérisé par la présence, en sus de la tour de jonction (31), d'au moins une tubulure de gazéification (48) reliant le caisson de refroidissement principal (12) au caisson de prérefroidissement (11).

2. Installation répondant aux revendications 1, caractérisée par la disposition essentiellement horizontale du caisson de refroidissement principal (12), par l'immersion au moins partielle du transporteur (41) danse le réfrigérant (38) du caisson de refroidissement principal (12) et par la présence de ventilateurs (69) à l'intérieur des tubulures de gazéification (48) devant relier le caisson de refroidissement principal (12) au caisson de prérefroidissement (11).

3. Installation répondant aux revendications 1 et 2, caractérisée par une couverture serrée de la tour d'alimentation (13) du caisson de prérefroidissement (11) au moyen d'une coupole (14) équipée d'un ventilateur extracteur (24).

4. Installation répondant aux revendications 1 à 3, caractérisée par une ouverture (21) pratiquée dans la tour d'alimentation (13) pour charger le caisson de prérefroidissement (11) via un clapet pendulaire (23) et qu'il est possible de fermer au moins partiellement à l'aide d'un volet (22).

5. Installation répondant aux revendications 1 à 4, caractérisée par le coudage (64) du transporteur (41) hors du réfrigérant (38) et par un système d'écluses (55) fermant l'ouverture d'évacuation (43) du caisson de refroidissement principal (12).

6. Installation répondant aux revendications 1 à 5, caractérisée par le cloisonnement de l'espace intérieur (40) du caisson de refroidissement principal (12) d'une part en largeur au moyen de cloisons (52) et d'autre part sous le coude (64) du transporteur (41) au moyen d'une rampe (42) avec remplissage isolant (53) de l'espace arrière ainsi fermé.

7. Installation répondant aux revendications 1 à 6, caractérisée par des parois solides (25, 35) protégeant le caisson de prérefroidissement (11) et le caisson de refroidissement principal (12), ces parois solides (25, 35) reposant sur des paliers à glissement (26, 37).

8. Installation répondant aux revendications 1 à 7, caractérisée par la présence d'un dispositif de concassage (66) intercalé entre l'ouverture d'évacuation (43) du caisson de refroidissement principal (12) et le système d'écluses (55).

9. Installation répondant aux revendications 1 à 8, caractérisée par la présence d'au moins un crible (73) équipant le dispositif de broyage (46) et au-dessous duquel est disposé un marteau finisseur rotatif (75) monté dans une chambre de broyage (76).

10. Installation répondant aux revendications 1 à 9, caractérisée par l'isolement par le vide (49) des caissons de prérefroidissement (11) et de refroidissement principaux (12).

11. Installation répondant aux revendications 1 à 10, caractérisée par un système de compensation des changements de longueurs (77) équipant les caissons de refroidissement principaux (12).
